# EUROPEAN PATENT SPECIFICATION

(11) **EP 3 093 720 B1**
(45) Date of publication and mention of the grant of the patent: **15.01.2020**
(21) Application number: 15167360.5
(22) Date of filing: 12.05.2015
(51) Int. Cl.: G05B 19/042, H02H 9/00

(54) **GALVANICALLY ISOLATED CURRENT TRANSMITTER WITH SELF-ADJUSTMENT ON RECOGNITION OF OPERATING CONDITIONS**
GALVANISCH ISOLIERTER STROMGEBER MIT SELBSTANPASSUNG BEI DER ERKENNUNG VON BETRIEBSBEDINGUNGEN
ÉMETTEUR DE COURANT GALVANIQUEMENT ISOLÉ AVEC AUTO-AJUSTAGE SUITE A LA RECONNAISSANCE DE CONDITIONS DE FONCTIONNEMENT

(43) Date of publication of application: 16.11.2016
(73) Proprietor: Pepperl & Fuchs GmbH, 68307 Mannheim (DE)
(72) Inventor: GATTANINI, Carlo, 20864 Agrate Brianza (MB) (IT)
(74) Representative: Schiffer, Axel Martin

(56) References cited:
- US-B1- 6 397 322

## Description

The invention relates to a connection module according to claim 1 and to a method for establishing a galvanically isolated connection of field devices to a control facility according to independent method-claim 18. US 6,397,322 B1 discloses a method and system for performing a task in an intrinsically safe environment using an intrinsically safe, integrated module located on the safe side to convey signals to and from a field device on the hazardous side.

More specifically, the present invention relates to a device for providing intrinsically safe supply, controlling and/or evaluation of field devices in explosion-protected areas. Such devices are known and usually have a current transformer for providing a galvanic isolation between a control and the hazardous area.

A general challenge in this context consists in providing different barrier functionalities for, in each case, different field devices. One solution in the prior art resides in using, in each case, different barrier circuits for the field devices. This, however, proved to be expansive and prone to malfunction.

Furthermore, apparatuses are known in the prior art where the functionalities of multifunctional I/O-boards are configured by microcontrollers or similar intelligent devices. Such setups which include software, however, can give to rise to difficulties with regard to safety standards.

A connection module for a galvanically isolated connection of field devices to a control facility according to the preamble of claim 1 comprises a primary side with primary connections for the connection to the control facility, a secondary side with secondary connections for the connection to the field device and coupling means for operationally connecting the primary side to the secondary side and galvanically isolating the primary side from the secondary side.

Such a connection module is e.g. described in WO 2013 110 296 A1. Therein, a device for the intrinsically safe supply, control and/or evaluation of field devices in the explosion-proof area is described which comprises a current transmitter for providing galvanic separation between a control and the explosion-proof area, connections on the control side for connection to a control device and a first and a second connection on the field side for the connection to field devices to be connected, wherein the second connection on the field side is configured to supply, control and/or evaluate field devices with analog functionality together with the first connection on the field side. The device is characterized in that the second connection on the field side is configured to supply, control and/or evaluate field devices with digital input functionality together with the first connection on the field side, a third connection on the field side that is configured to supply field devices with digital output functionality together with the first connection on the field side is provided, and signal determination means for activating and or determining a functionality of the second and/or the third connection on the field side are provided.

WO 2013 110 295 A1 describes an apparatus for the intrinsically safe supplying, triggering, and/or evaluation of field devices in the explosion-proof realm, comprising terminals at the controller end which are to be connected to a bus and to a voltage supply, terminals at the field device end which are to be connected to the field devices, and a plurality of intrinsically safe voltage supplies, each of which has different characteristic values. The described apparatus is characterized in that signal defining means are provided to define different functionalities for at least one intrinsically safe pair of the terminals at the field device end.

WO 2013 110 294 A1 describes a connection module for field devices in the explosion-proof realm, comprising a housing that has a plurality of terminals at the controller end which are to be connected to at least one input/output module as well as terminals at the field device end which are to be connected to the field devices. The connection module described is characterized in that the housing includes different resistors which are hard-wired to different terminals at the field device end and/or to terminals at the controller end in order to provide intrinsically safe pairs of terminals at the field device end which have different characteristic values.

The object of the present invention may be seen in providing an improved device, i.e. an improved connection module for field devices, especially for application in the explosion-proof realm.

This object of the present invention is solved by connection module having the features of claim 1 and by a method having the features of the independent method-claim 18. Advantageous embodiments of the present invention are subjects of dependent claims and are described in the following, in particular with reference to the attached figures.

According to the invention, the connection module as described above is characterized in that electronic detecting and adjusting means are provided for automatically detecting properties and/or requirements, particularly electrical signal properties and/or electrical signal requirements, of a control facility and a field device when the control facility is connected to the primary side and the field device is connected to the secondary side and both, the control facility and the field device, are operative and for automatically adjusting electrical parameters, in particular the electrical transfer characteristics, of the connection module to comply with detected properties and/or requirements of the control facility and the field device.

In connection with the specification of the present invention, the term properties of a field device shall be understood to designate all kinds of properties of such a field device, especially signal properties, which may be detected by observing or measuring electrical characteristics (or responses to stimuli) of such a field device. Important examples of such properties may be resistance, inductance, voltage or current output, and other kinds of characteristics. The term requirements, especially signal requirements, of a field device shall be understood to designate all kinds of requirements which have to be compiled with in order to allow for an intended or designated use of such a field device. Important examples of such requirements may be maximal or minimal voltages and/or currents as well as voltage and/or current offsets, accuracy and transfer characteristics.

Variable kinds of field devices and different control devices can therefore be connected to the connection module according to the invention. The connection module according to the invention can therefore be used as a universal intrinsically safe connection module. Specialized types of connection modules, which are individualized for each different field device and the stockpiling of which is expensive are therefore no longer necessary.

In principle, the galvanically isolated coupling can be brought about by optocouplers, i.e. the coupling means can comprise optocoupling means. According to a preferred embodiment of the present invention, however, the coupling means comprises at least one current transformer with a primary and a secondary winding for galvanic isolation, with a primary current flowing through the primary winding and a secondary current flowing through the secondary winding. In principle, the transformer can have any suitable transformation ratio. Preferably, the transformer has a 1/1 transformation ratio. Thereby, the design of the connection circuit can be simplified. Preferably, the transformer is driven as a current repeater.

According to a preferred embodiment of the present invention, the coupling means comprise a DC/AC-AC/DC converter. Such components are known in the art.

Generally, it is possible to realise certain functions of the connection module according to the invention by making use of intelligent devices like, e.g., microcontrollers. I.e. the electronic detecting and adjusting means can comprise a microcontroller for automatically adjusting electrical parameters, in particular the electrical transfer characteristics, of the connection module to comply with detected properties and/or requirements of the control facility and the field device.

A very important advantage of the invention, however, resides in the fact that, contrary to solutions of the prior art, it can in principle be realised without any programmable devices like microcontrollers or microprocessors. Using analog comparators instead of a digital microprocessors increases the security and reliability of connection modules according to the present invention if compared to connection modules comprising digital microprocessors. This is particularly important in view of the qualification for safety standards.

According to a further preferred embodiment of the present invention, the electronic detecting and adjusting means can comprise a primary current measurement device for measuring a primary current, in particular a current through the primary winding, and/or the electronic detecting and adjusting means can comprise a first variable resistor which is connected in series to the primary connections and/or the first variable resistor can be adjusted in dependence of a primary current measured by the primary current measurement device. This is useful if the primary current gives a hint to the type of field device being connected to the connection module.

A further preferred embodiment is characterized in that the electronic detecting and adjusting means comprise a primary voltage measurement device for measuring a voltage at the primary side, in particular a voltage across the primary winding and more preferably a voltage present at one connection of the primary winding, and/or that the first variable resistor is adjusted also in dependence of a voltage measured by the primary voltage measurement device. A further preferred embodiment is characterized in that the electronic detecting and adjusting means comprise a secondary voltage measurement device for measuring a voltage at the secondary side, in particular a voltage across the secondary winding, that the electronic detecting and adjusting means comprise a second variable resistor which is connected in series to the secondary connections, in particular in series to the secondary winding, and that the second variable resistor is adjusted in dependence of a voltage measured by the secondary voltage measurement device. These embodiments are especially useful if the primary and/or secondary voltage gives a hint to the type of field device being connected to the connection module.

A further preferred embodiment is characterized in that the primary current measurement device, the primary voltage measurement device and/or the secondary voltage measurement device comprise analog comparators and that a measured primary current is compared with at least one primary current theshold, a measured primary voltage is compared with at least one primary voltage theshold, and/or a measured secondary voltage is compared with at least one secondary voltage theshold.

A further preferred embodiment is characterized in that the electronic detecting and adjusting means are configured to adjust electrical parameters of the connection module to comply with properties and requirements of a field device being controlled by an analog signal, outputted by the secondary connections, if the primary current exceeds a first primary current threshold value, preferably given by 3.5 mA, and if, in particular simultaneously, the primary voltage is smaller than a first primary voltage threshold value, preferably given by 21.5 V.

A further preferred embodiment is characterized in that the electronic detecting and adjusting means comprise a current offset means for applying a current offset to the primary side current and that the current offset means applies a current offset to the primary current in the case where a measured primary current exceeds the first primary current threshold and, in particular simultaneously, a measured primary voltage is smaller than the first primary voltage threshold.

A further preferred embodiment is characterized in that the electronic detecting and adjusting means comprises means for increasing a parallel capacitance at the primary side, means for reducing a series impedance of a primary low pass filter and/or means for reducing the dead-time of a driver for the 1/1-transformer.

A further preferred embodiment is characterized in that the electronic detecting and adjusting means are configured to adjust electrical parameters of the connection module to comply with properties and/or requirements of a field device being controlled by a digital signal, outputted at the secondary connections, if the primary current exceeds a second primary current threshold value, preferably given by 24 mA, which exceeds the first current threshold.

A further preferred embodiment is characterized in that the means for increasing a parallel capacitance at the primary side, the means for reducing a series impedance of a primary low pass filter and/or the means for reducing the dead-time of a driver for the 1/1-transformer are operational when the measured primary side current exceeds a second current threshold, particularly 24 mA.

A further preferred embodiment is characterized in that the electronic detecting and adjusting means are configured to adjust electrical parameters of the connection module to comply with properties and/or requirements of a field device producing a digital signal, e.g. a proximity switch, to be inputted into the secondary connections, if the primary current is smaller than a third primary current threshold value, preferably given by 0.1 mA, the third primary current threshold value being smaller than the first primary current threshold value.

A further preferred embodiment is characterized in that the electronic detecting and adjusting means are configured for proportionally reducing the primary voltage by means of the first variable resistor in the case when the primary side current is smaller than the third threshold, in particular 0.1 mA.

A further preferred embodiment is characterized in that monitoring means are provided for monitoring at least one of a primary current, a primary voltage and/or a secondary voltage. Such a monitoring means can be helpful for achieving the desired Safety Integrity Level (SIL) in both, analog and microcontroller based embodiments.

A further preferred embodiment is characterized in that the the electronic detecting and adjusting means is configured to recognise a line breakage in the secondary connections with a field device if the primary current is smaller than a fourth primary current threshold value, preferably given by 0.1 mA, which is smaller than the first primary current threshold. This feature may facilitate detection of a line breakage in the connections with a field device, possibly in connection with the evaluation of other indicating criteria.

According to a preferred embodiment of the present invention, the connection module is configured to be able to report a recognized line breakage in the connections with a field device to the control facility. This feature may facilitate the report of a line breakage in the connections with a field device, possibly in connection with further means for communication.

The method for a establishing a galvanically isolated connection of field devices to a control facility according to the present invention comprises the following steps: connecting a control facility to primary connections at a primary side of a connection module and connecting a field device to secondary connections at a secondary side of the connection module. According to the invention, properties and/or requirements, particularly electrical signal properties and/or electrical signal requirements, of the control facility and the field device are detected when both, the control facility and the field device, are operative and electrical parameters, in particular the electrical transfer characteristics, of the connection module are adjusted to comply with detected properties and/or requirements of the control facility and the field device.

According to a preferred embodiment of the present invention, this method uses a connection module according to the present invention.

Advantageous embodiments of the present invention will be described in more detail in connection with the following figures below:
- Fig. 1: shows a schematic representation of the basic circuitry of a preferred embodiment of a connection module according to the present invention;
- Fig. 2: shows a schematic representation of further circuitry of a preferred embodiment of a connection module according to the present invention.
- Fig. 3: shows a schematic representation of a current-voltage diagram representing the characteristics of a preferred embodiment of a connection module according to the present invention.

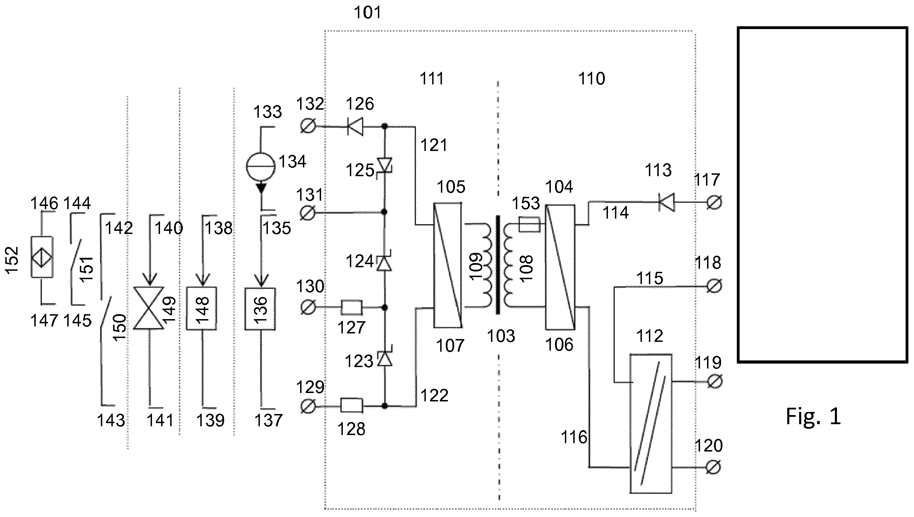

Figure 1 shows a connection module 101 according to the present invention which, through terminals 117 and 118, can be connected to a circuit of a control facility on the control side. The connection circuit to the control side is preferably designed to be compatible with the input and/or output of a universal or a configurable input/output system and preferably comprises a micro-controller or micro-processor. Such connection circuits are known in the prior art.

Terminals 119 and 120 constitute a power input of the connection module 101, which is used to provide auxiliary power to the connection module, if required. The power is transmitted via a galvanic isolation 112 of the power supply, preferably a transformer plus a rectifier plus a chopper, via connection 116 to the DC-side 104 of a DC/AC-AC/DC-converter 104, 106, which converts a DC input applied at terminal 117 via diode 113 and connection 114 into an AC signal, provided by the AC-side 106 of the DC/AC-AC/DC-converter 104, 106 to the primary winding 108 of the current transformer 108, 103, 109, preferably via a fuse 153, e.g. a 100 mA fuse. Terminal 118 is connected to the galvanic isolation 112 of the power supply via a connection 115. Apart from galvanic isolation, the booster 112 preferably also serves to adjust signal waveforms by balancing nonlinearities of the transformers.

The current transformer 108, 103, 109 separates the control side or primary side 110 of the connection module 101 from the field side or secondary side 111 of the connection module. Both sides are therefore galvanically isolated from each other.

The DC/AC-AC/DC-converter 104, 106 may preferably be operated in both directions, i.e. converting a DC input applied at terminal 117 via diode 113 and connection 114 into an AC signal, as well as converting an AC signal applied at the AC-side 106 of the DC/AC-AC/DC-converter 104, 106 into an DC signal, available at the DC-side 104 of the DC/AC-AC/DC-converter 104, 106.

The secondary winding 109 of the current transformer 108, 103, 109 is connected to the AC-side 105 of a DC/AC-AC/DC-converter 105, 107, which converts the AC-current flowing through the secondary winding 109 into a DC-signal, which is then available at the DC-side 107 of the DC/AC-AC/DC-converter 105, 107. The DC/AC-AC/DC-converter 105, 107 may preferably be operated in both directions, i.e. converting an DC input applied at terminals 129, 130, 131 or 132 through the connections 121 and 122 to the DC-side 107 of DC/AC-AC/DC-converter 105, 107 into an AC signal, then available at the AC-side 105 of the DC/AC-AC/DC-converter 105, 107 and then flowing through the secondary winding 109, as well as converting an AC signal applied at the AC-side 105 of the DC/AC-AC/DC-converter 105, 107 into an DC signal, then available at the DC-side 107 of the DC/AC-AC/DC-converter 105, 107.

Any DC-signal applied to or provided by the DC-side 107 of the DC/AC-AC/DC-converter 105, 107 via connections 121 and 122 will pass the circuitry connecting the DC-side 107 of the DC/AC-AC/DC-converter 105, 107 with the terminals 129, 130, 131 and 132, this circuitry comprising the diode 126, the Zener diodes 123, 124 and 125 as well as the resistors 127 and 128 as depicted in figure 1.

As shown in figure 1, various field devices may be connected to the terminals 129, 130, 131 and 132 on the field side of the connection module.

First, a measurement device for a physical quantity like, e.g. temperature, pressure etc., which acts as a current source 134 can be connected to terminals 132 and 131 through connections 133 and 135. The current source 134 sources a variable current, e.g. in the range of 0/4 to 20mA, in dependence of the measured physical quantity. Furthermore, a measurement device for a physical quantity like, e.g. temperature, pressure etc., which acts as a current sink 136 can be connected to terminals 131 and 129 through connections 135 and 137. The current sink 136 sinks a variable current, e.g. in the range of 0/4 to 20mA, in dependence of the measured physical quantity. When either current source 134 or current sink 136 is connected to the connection module terminals 132 and 131 or 131 and 129, respectively, the connection module works in an "analog input" mode, because, in each case, an analog signal is input to the connection module either by sourcing (field device = current source 133) or by sinking (field device = current sink 136) a variable current. The transferred signals, i.e. the variable currents, are preferably in the range of 0 (minimum) to 4 ... 20 mA (maximum).

Alternatively, a field device 148 expecting an analog input signal through connections 138 and 139, connected to terminals 131 and 129, respectively, may be connected to the connection module, which in this case works in an "analog output" mode, because the connection module outputs an analog signal to the analog field device 148. Examples for such devices 148 are e.g. electrical drives or actuators or various kinds.

The connection module may also be used to output a digital signal to a field device 149 through connections 140 and 141, connected to terminals 131 and 129, respectively. An example for such a field device 149 is e.g. a valve or an actuator of any kind which has only two states (like "open" or "closed").

Digital devices 150, 151 or 152, switch 152 preferably being a NAMUR-switch, generating digital output signals may also be connected via connections 142, 143, 144, 145, 146 or 147 and terminals 131 and 129 to the connection module.

The connection module will recognize the required mode at any time and be able to transmit these signals between the control facility and the field device in both directions through the galvanic isolation 108, 103 and 109.

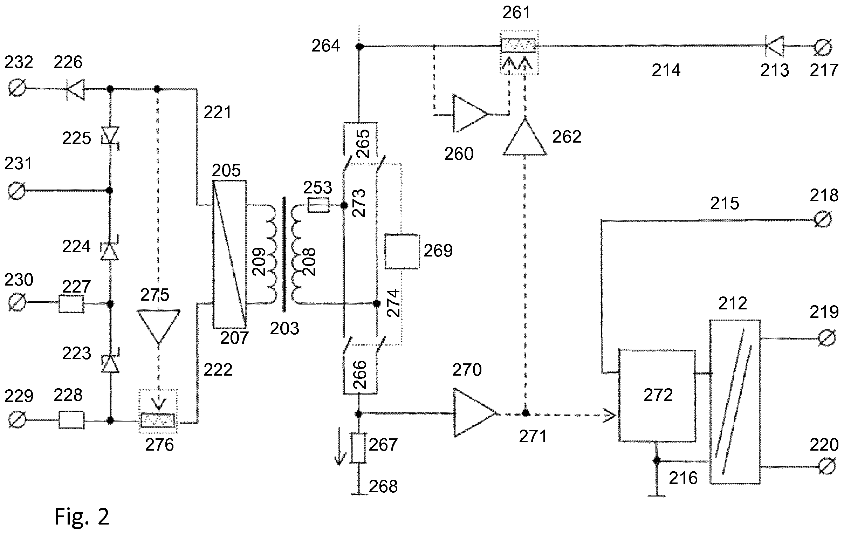

In Figs. 1 and 2, similar and equivalent components generally carry the similar reference numerals. More specifically, the corresponding reference numerals have, in each case, the same first and second digits. E.g. connectors 129,..,132 in Fig. 1 are the same components as connectors 229,..,232 in Fig. 2. Such components are generally described only once.

As shown in figure 2, the DC/AC-AC/DC-converter 104, 106 may be realized by a series of two pairs of switches 265, 266, controlled by a full bridge driver 269. Depending on the switch positions, potentials at conductors 273 and 274 will be "high" or "low", with a resulting current flowing through winding 208. The direction of this current is also defined by the switch positions. A voltage drop along shunt resistor 267, preferably a 5 Ohm resistor, which is proportional to this current, will cause the input of operational amplifier 270 to vary between various voltage levels, generating a signal 271, an amplified primary current, which influences the first voltage controlled resistor 261 via operational amplifier 262 together with the primary voltage measured at point 264, which is amplified by operational amplifier 260. One purpose of this first voltage controlled resistor is to modulate the drop between the output of the distributed control system and the primary side of the transformer 208, 203 and 209. The signal provided by operational amplifier 270 at 271 also influences a step-down output of a galvanically isolated power supply 212. The step-down can amount e.g. to 9 Volts.

Another operational amplifier 275 is provided between connection 221 and the second voltage controlled resistor 276. Both voltage controlled resistors, 261 and 276, are designed to keep a minimum primary voltage at point 264 of preferably 21V and a low impedance to comply with the requirements of the Highway Addressable Remote Transducer (HART) communication protocol, which is widely used in connection with field devices. A voltage of 24 V is preferably applied to the power supply input 219 and 220.

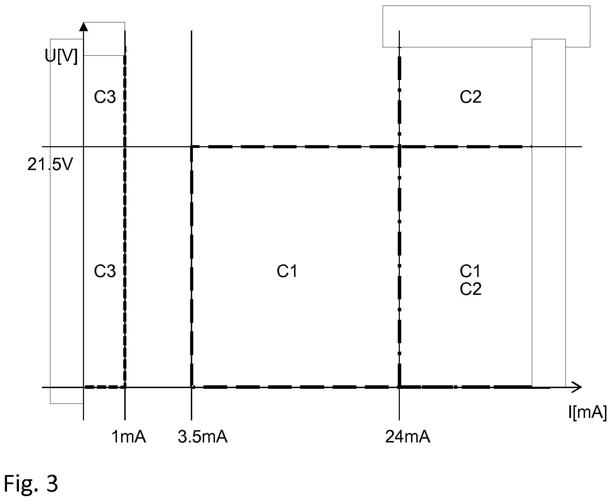

The diagram of figure 3 illustrates the different domains in a two-dimensional space spanned by the primary voltage U (given in Volt) and the primary current I (given in mA), which correspond to different operating modes of corresponding preferred embodiments of the connection device. The threshold values should be taken as examples only. Domain C1 corresponds to the operating mode, in which the connection module is configured to adjust its electrical parameters to comply with properties and/or requirements of a field device being controlled by an analog signal, outputted by or inputted to the connection module, if the primary current exceeds a first current threshold value, preferably given by 3.5 mA, and if the primary voltage is smaller than a first voltage threshold value, preferably given by 21.5 V.

Domain C2, which partially overlaps with C1, corresponds to the operating mode, in which the connection module is configured to adjust its electrical parameters to comply with properties and/or requirements of a field device being controlled by a digital signal, outputted by the connection module, if the primary current exceeds a second current threshold value, preferably given by 24 mA.

Domain C3 corresponds to the operating mode, in which the connection module is configured to adjust its electrical parameters to comply with properties and/or requirements of a field device producing a digital signal, to be inputted in the connection module, and/or is configured to be able to recognize a line breakage in the connections with a field device, if the primary current is smaller than a third current threshold value, preferably given by 1 mA.

The following list of reference numerals and symbols is an integral part of the specification.

### List of reference numerals and symbols

- 101: device according to the present invention, current transmitter
- 103: current transformer
- 104: DC-side of DC/AC-AC/DC-converter on the control side
- 105: AC-side of DC/AC-AC/DC-converter on the field side
- 106: AC-side of DC/AC-AC/DC-converter on the control side
- 107: DC-side of DC/AC-AC/DC-converter on the field side
- 108: control side (primary) winding of current transformer
- 109: field side (secondary) winding of current transformer
- 110: control side = primary side
- 111: field side = secondary side
- 112: galvanically isolated power supply of the device according to the present invention
- 113: diode for reverse polarity protection
- 114: connection between diode 113 and DC-side of DC/AC-AC/DC-converter on the control side
- 115: connection between terminal 118 and galvanically isolated power supply 112
- 116: connection between DC-side of DC/AC-AC/DC-converter 104 and galvanically isolated power supply 112
- 117: terminal on the control side
- 118: terminal on the control side
- 119: terminal on the control side
- 120: terminal on the control side
- 121: first connection between field side circuitry of the device and DC-side 107 of DC/AC-AC/DC-converter
- 122: second connection between field side circuitry of the device and DC-side 107 of DC/AC-AC/DC-converter
- 123: Zener diode
- 124: Zener diode
- 125: Zener diode
- 126: diode
- 127: resistor
- 128: resistor
- 129: terminal on the field side
- 130: terminal on the field side
- 131: terminal on the field side
- 132: terminal on the field side
- 133: connection of current source
- 134: current source
- 135: connection
- 136: field device producing analog signals
- 137: connection
- 138: connection
- 139: connection
- 140: connection
- 141: connection
- 142: connection
- 143: connection
- 144: connection
- 145: connection
- 146: connection
- 147: connection
- 148: field device receiving analog signals
- 149: field device receiving digital signals, e.g. valve
- 150: field device producing digital signals, e.g. mechanical switch
- 151: field device producing digital signals, e.g. mechanical switch
- 152: field device producing digital signals, e.g. NAMUR switch
- 203: current transformer
- 205: AC-side of DC/AC-AC/DC-converter on the field side
- 207: DC-side of DC/AC-AC/DC-converter on the field side
- 208: control side winding of current transformer
- 209: field side winding of current transformer
- 212: galvanically isolated power supply
- 213: diode
- 214: connection between diode 113 and DC-side of DC/AC-AC/DC-converter on the control side
- 215: connection between terminal 218 and galvanically isolated power supply 212
- 216: connection between DC-side of DC/AC-AC/DC-converter 204 and galvanically isolated power supply 212
- 217: terminal on the control side
- 218: terminal on the control side
- 219: terminal on the control side
- 220: terminal on the control side
- 221: first connection between field side circuitry of the device and DC-side of DC/AC-AC/DC-converter 207
- 222: second connection between field side circuitry of the device and DC-side of DC/AC-AC/DC-converter 207
- 223: Zener diode
- 224: Zener diode
- 225: Zener diode
- 226: diode
- 227: resistor
- 228: resistor
- 229: terminal on the field side
- 230: terminal on the field side
- 231: terminal on the field side
- 232: terminal on the field side
- 260: operational amplifier
- 261: variable resistor
- 262: operational amplifier
- 264: connection
- 265: pair of switches
- 266: pair of switches
- 267: resistor
- 268: ground
- 269: full bridge driver, driving the switches 265 and 266
- 270: operational amplifier
- 271: connection
- 272: step-down 9V output
- 273: connection
- 274: connection
- 275: operational amplifier
- 276: variable resistor
- U[V]: primary voltage in volt
- I[mA]: primary current in ampere
- C1: area of case 1
- C2: area of case 2
- C3: area of case 3

## Claims

1. Connection module (101) adapted to provide a galvanically isolated connection of field devices to a control facility, comprising
a primary side (110) with primary connections (117, 118; 217, 218) for the connection to the control facility,
a secondary side (111) with secondary connections (129,..,132; 229,..,232) for the connection to the field device (134, 136, 148,..,152) and
coupling means (103,..,109) adapted to operationally connect the primary side (110) to the secondary side (111) and to galvanically isolate the primary side (110) from the secondary side (111),
wherein
electronic detecting and adjusting means (260, 261, 262, 270, 275, 276) are adapted to
automatically detect properties and/or requirements, e.g. electrical signal properties and/or electrical signal requirements, of a control facility and a field device when the control facility is connected to the primary side (110) and the field device is connected to the secondary side (111) and both, the control facility and the field device, are operative
to automatically adjust electrical parameters, e.g. electrical transfer characteristics, of the connection module to comply with detected properties and/or requirements of the control facility and the field device,
**characterized in**
**that** the electronic detecting and adjusting means comprise a primary current measurement device (267, 270) for measuring a primary current through a primary winding (208),
**that** the electronic detecting and adjusting means comprise a first variable resistor (261) which is connected in series to the primary connections (217, 218) and
**that** the first variable resistor (261) is adjusted in dependence of a primary current measured by the primary current measurement device (267, 270).

2. Connection module according to claim 1,
**characterized in**
**that** the coupling means comprises at least one current transformer (103, 108, 109) with a primary (108) and a secondary (109) winding for galvanic isolation, with a primary current flowing through the primary winding and a secondary current flowing through the secondary winding.

3. Connection module according to claim 2,
**characterized in that**
the transformer (103, 108, 109) has a 1/1 transformation ratio.

4. Connection module according to one of the claims 1 to 3,
**characterized in**
**that** the coupling means (103,..,109) comprise a DC/AC-AC/DC converter.

5. Connection module according to one of the claims 2 - 4,
**characterized in**
**that** the electronic detecting and adjusting means comprise a primary voltage measurement device (260) for measuring a voltage at the primary side (110), across the primary winding (208) or a voltage present at one connection (264) of the primary winding (208), and
**that** the first variable resistor (261) is adjusted also in dependence of a voltage measured by the primary voltage measurement device (260).

6. Connection module according to one of the claims 2 to 5,
**characterized in**
**that** the electronic detecting and adjusting means comprise a secondary voltage measurement device (275) for measuring a voltage at the secondary side (111) or across the secondary winding (209),
**that** the electronic detecting and adjusting means comprise a second variable resistor (276) which is connected in series to the secondary connections (229,..,232) or in series to the secondary winding (209), and
**that** the second variable resistor (276) is adjusted in dependence of a voltage measured by the secondary voltage measurement device (275).

7. Connection module according to claims 5 and 6
**characterized in that**
the primary current measurement device (267, 270), the primary voltage measurement device (260) and/or the secondary voltage measurement device (275) comprise analog comparators and that
a measured primary current is compared with at least one primary current theshold,
a measured primary voltage is compared with at least one primary voltage theshold, and/or
a measured secondary voltage is compared with at least one secondary voltage theshold.

8. Connection module according to one of the claims 1 to 7,
**characterized in that**
the electronic detecting and adjusting means are configured to adjust electrical parameters of the connection module to comply with properties and requirements of a field device being controlled by an analog signal, outputted by the secondary connections, if the primary current exceeds a first primary current threshold value, e.g. given by 3.5 mA, and if, in particular simultaneously, the primary voltage is smaller than a first primary voltage threshold value, e.g. given by 21.5 V.

9. Connection module according to one of the claims 1 to 8,
**characterized in**
**that** the electronic detecting and adjusting means comprise a current offset means for applying a current offset to the primary side current and
**that** the current offset means applies a current offset to the primary current in the case where a measured primary current exceeds a first primary current threshold and, a measured primary voltage is smaller than a first primary voltage threshold.

10. Connection module according to claim 3
**characterized in**
**that** the electronic detecting and adjusting means comprises means for increasing a parallel capacitance at the primary side,
means for reducing a series impedance of a primary low pass filter and/or means for reducing the dead-time of a driver for the 1/1-transformer.

11. Connection module according to claim 8
**characterized in that**
the electronic detecting and adjusting means are configured to adjust electrical parameters of the connection module to comply with properties and/or requirements of a field device being controlled by a digital signal, outputted at the secondary connections, if the primary current exceeds a second primary current threshold value, e.g. given by 24 mA, which exceeds the first primary current threshold.

12. Connection module according to claim 10,
**characterized in that**
the means for increasing a parallel capacitance at the primary side,
the means for reducing a series impedance of a primary low pass filter and/or the means for reducing the dead-time of a driver for the 1/1-transformer are operational when the measured primary side current exceeds a second current threshold, e.g. 24 mA.

13. Connection module according to claim 8
**characterized in that**
the electronic detecting and adjusting means are configured to adjust electrical parameters of the connection module to comply with properties and/or requirements of a field device producing a digital signal, e.g. a proximity switch, to be inputted into the secondary connections, if the primary current is smaller than a third primary current threshold value, e.g. given by 0.1 mA, the third primary current threshold value being smaller than the first primary current threshold value.

14. Connection module according to claim 13
**characterized in that**
the electronic detecting and adjusting means are configured for proportionally reducing the primary voltage by means of the first variable resistor (261) in the case when the primary side current is smaller than the third threshold, e.g 0.1 mA.

15. Connection module according to one of claims 1 to 14,
**characterized in that**
the electronic detecting and adjusting means comprise a microcontroller for automatically adjusting electrical parameters, e.g. the electrical transfer characteristics, of the connection module to comply with detected properties and/or requirements of the control facility and the field device.

16. Connection module according to one of claims 1 to 15,
**characterized in that**
monitoring means are provided for monitoring at least one of a primary current, a primary voltage and/or a secondary voltage.

17. Connection module according to claim 8
**characterized in**
**that** the the electronic detecting and adjusting means is configured to recognise a line breakage in the secondary connections with a field device if the primary current is smaller than a fourth primary current threshold value, e.g. given by 0.1 mA, which is smaller than the first primary current threshold.

18. Method for a establishing a galvanically isolated connection of a field device to a control facility, comprising the following steps:
connecting a control facility to primary connections (117, 118; 217, 218) at a primary side (110) of a connection module (101) and
connecting a field device (134, 136, 148,..,152) to secondary connections (129,..,132; 229,..,232) at a secondary side (111) of the connection module (101) wherein
electrical signal properties and/or electrical signal requirements, of the control facility and the field device are detected when both, the control facility and the field device, are operative and
that electrical parameters, e.g. electrical transfer characteristics, of the connection module are adjusted to comply with detected properties and/or requirements of the control facility and the field device,
**characterized in that**
a connection module according to one of the claims 1 to 17 is used.

## Patentansprüche

1. Verbindungsmodul (101), das eingerichtet ist zum Bereitstellen einer galvanisch isolierten Verbindung von Feldgeräten zu einer Steuereinrichtung, mit einer Primärseite (110) mit Primäranschlüssen (117, 118; 217, 218) für die Verbindung mit der Steuereinrichtung,
einer Sekundärseite (111) mit Sekundäranschlüssen (129,..,132; 229,..,232) für die Verbindung mit dem Feldgerät (134, 136, 148,..,152) und Kopplungsmittel (103,..,109), die dazu eingerichtet sind, die Primärseite (110) mit der Sekundärseite wirkungsmäßig zu verbinden (111) und die Primärseite (110) von der Sekundärseite 111) galvanisch zu isolieren,
wobei
elektronische Detektions- und Einstellmittel (260, 261, 262, 270, 275, 276) dazu eingerichtet sind,
automatisch Eigenschaften und/oder Anforderungen, zum Beispiel elektrische Signaleigenschaften und/oder elektrische Signalanforderungen, einer Steuereinrichtung und eines Feldgeräts zu detektieren, wenn die Steuereinrichtung mit der Primärseite (110) verbunden ist und dass Feldgerät mit der Sekundärseite (111) verbunden ist und sowohl die Steuereinrichtung als auch das Feldgerät in Betrieb sind,
automatisch elektrische Parameter, zum Beispiel elektrische Transfercharakteristika, des Verbindungsmoduls so einzustellen, dass sie den detektierten Eigenschaften und/oder Anforderungen der Steuereinrichtung und des Feldgeräts entsprechen,
**dadurch gekennzeichnet,**
**dass** die elektronischen Detektions- und Einstellmittel eine Primärstrommesseinrichtung (267, 270) aufweisen zum Messen eines Primärstroms durch eine Primärwicklung (208),
**dass** die elektronischen Detektions- und Einstellmittel einen ersten variablen Widerstand (261) aufweisen, der mit den Primäranschlüssen (217, 218) in Reihe geschaltet ist und
**dass** der erste variable Widerstand (261) in Abhängigkeit eines von der Primärstrommesseinrichtung (267,270) gemessenen Primärstroms eingestellt wird.

2. Verbindungsmodul nach Anspruch 1,
**dadurch gekennzeichnet,**
**dass** die Kopplungsmittel mindestens einen Stromtransformator (103, 108, 109) aufweisen mit einer Primärwicklung (108) und einer Sekundärwicklung (109) zur galvanischen Isolierung, wobei durch die Primärwicklung ein Primärstrom und durch die Sekundärwicklung ein Sekundärstrom fließt.

3. Verbindungsmodul nach Anspruch 2,
**dadurch gekennzeichnet,**
**dass** der Transformator (103, 108, 109) ein Transformationsverhältnis von 1/1 aufweist.

4. Verbindungsmodul nach einem der Ansprüche 1 bis 3,
**dadurch gekennzeichnet,**
**dass** die Kopplungsmittel (103,..,109) einen DC/AC-AC/DC-Umwandler aufweisen.

5. Verbindungsmodul nach einem der Ansprüche 2 bis 4,
**dadurch gekennzeichnet,**
**dass** die elektronischen Detektions- und Einstellmittel eine Primärspannungsmesseinrichtung (260) aufweisen zum Messen einer Spannung an der Primärseite (110), über die Primärwicklung (208) oder eine an einem Anschluss (264) der Primärwicklung (208) vorhandene Spannung, und dass der erste variable Widerstand (261) auch in Abhängigkeit einer von der Primärspannungsmesseinrichtung (260) gemessenen Spannung eingestellt wird.

6. Verbindungsmodul nach einem der Ansprüche 2 bis 5,
**dadurch gekennzeichnet,**
**dass** die elektronischen Detektions- und Einstellmittel eine Sekundärspannungsmesseinrichtung (275) aufweisen zum Messen einer Spannung an der Sekundärseite (111) oder über die Sekundärwicklung (209),
**dass** die elektronischen Detektions- und Einstellmittel einen zweiten variablen Widerstand (276) aufweisen, der mit den Sekundäranschlüssen (229,..,232) in Serie verbunden oder in Reihe zu der Sekundärwicklung (209) ist, und dass der zweite variable Widerstand (276) in Abhängigkeit einer von der Sekundärspannungsmesseinrichtung (275) gemessenen Spannung eingestellt wird.

7. Verbindungsmodul nach den Ansprüchen 5 und 6,
**dadurch gekennzeichnet,**
**dass** die Primärstrommesseinrichtung (267, 270), die Primärspannungsmesseinrichtung (260) und/oder die Sekundärspannungsmesseinrichtung (275) analoge Komparatoren aufweisen und dass
ein gemessener Primärstrom mit mindestens einer Primärstromschwelle verglichen wird,
eine gemessene Primärspannung mit mindestens einer Primärspannungsschwelle verglichen wird und/oder
eine gemessene Sekundärspannung mit mindestens einer Sekundärspannungsschwelle verglichen wird.

8. Verbindungsmodul nach einem der Ansprüche 1 bis 7,
**dadurch gekennzeichnet,**
**dass** die elektronischen Detektions- und Einstellmittel dazu konfiguriert sind, elektrische Parameter des Verbindungsmoduls so einzustellen, dass sie den Eigenschaften und Anforderungen eines Feldgeräts entsprechen, das von einem analogen Signal gesteuert wird, welches von den Sekundäranschlüssen ausgegeben wird, wenn der Primärstrom einen ersten Primärstromschwellwert, zum Beispiel gegeben durch 3,5 mA, überschreitet und wenn, insbesondere gleichzeitig, die Primärspannung kleiner ist als ein erster Primärspannungsschwellwert, zum Beispiel gegeben durch 21,5 V.

9. Verbindungsmodul nach einem der Ansprüche 1 bis 8,
**dadurch gekennzeichnet,**
**dass** die elektronischen Detektions- und Einstellmittel ein Strom-Offset-Mittel aufweisen zum Anwenden eines Strom-Offsets auf den primärseitigen Strom und
**dass** das Strom-Offset-Mittel einen Strom-Offset auf den Primärstrom in dem Fall anwendet, wo ein gemessener Primärstrom einen erste Primärstromschwelle überschreitet und eine gemessene Primärspannung kleiner ist als eine erste Primärspannungsschwelle.

10. Verbindungsmodul nach Anspruch 3,
**dadurch gekennzeichnet,**
**dass** die elektronischen Detektions- und Einstellmittel aufweisen:
Mittel zum Erhöhen einer Parallelkapazität an der Primärseite,
Mittel zum Reduzieren einer Reihenimpedanz eines primären Tiefpassfilters und/oder
Mittel zum Reduzieren einer Totzeit eines Treibers für den 1/1-Transformator.

11. Verbindungsmodul nach nach Anspruch 8,
**dadurch gekennzeichnet,**
**dass** die elektronischen Detektions- und Einstellmittel dazu konfiguriert sind, elektrische Parameter des Verbindungsmoduls so einzustellen, dass sie den Eigenschaften und/oder Anforderungen eines Feldgeräts entsprechen, welches durch ein digitales Signal gesteuert wird, das an den Sekundäranschlüssen ausgegeben wird, wenn der Primärstrom einen zweiten Primärstromschwellwert, zum Beispiel gegeben durch 24 mA, überschreitet, der größer ist als der erste Primärstromschwellwert.

12. Verbindungsmodul nach Anspruch 10,
**dadurch gekennzeichnet, dass**
die Mittel zum Erhöhen einer Parallelkapazität an der Primärseite,
die Mittel zum Reduzieren einer Reihenimpedanz eines primären Tiefpassfilters und/oder
die Mittel zum Reduzieren der Totzeiten eines Treibers für den 1/1-Transformator in Betrieb sind wenn der gemessene primärseitige Strom eine zweite Stromschwelle, zum Beispiel 24 mA, überschreitet.

13. Verbindungsmodul nach Anspruch 8,
**dadurch gekennzeichnet,**
**dass** die elektronischen Detektions- und Einstellmittel dazu konfiguriert sind, elektrische Parameter des Verbindungsmoduls so einzustellen, dass sie den Eigenschaften und/oder Anforderungen eines Feldgeräts entsprechen, welches ein digitales Signal produziert, welches in die Sekundäranschlüsse eingegeben wird, zum Beispiel eines Näherungsschalters, wenn der Primärstrom kleiner ist als ein dritter Primärstromschwellwert, zum Beispiel gegeben durch, 0,1 mA, wobei der dritte Primärstromschwellwert kleiner ist als der erste Primärstromschwellwert.

14. Verbindungsmodul nach Anspruch 13,
**dadurch gekennzeichnet,**
**dass** die elektronischen Detektions- und Einstellmittel dazu konfiguriert sind, die Primärspannung mithilfe des ersten einstellbaren Widerstands (261) proportional zu reduzieren, wenn der primärseitige Strom kleiner ist als die dritte Schwelle, zum Beispiel 0, 1 mA.

15. Verbindungsmodul nach einem der Ansprüche 1 to 14,
**dadurch gekennzeichnet,**
**dass** die elektronischen Detektions- und Einstellmittel einen Mikrocontroller aufweisen zum automatischen Einstellen von elektrischen Parametern, zum Beispiel der elektrischen Transfercharakteristika, des Verbindungsmoduls, dergestalt, dass sie den detektierten Eigenschaften und/oder Anforderungen der Steuereinrichtung und des Feldgeräts entsprechen.

16. Verbindungsmodul nach einem der Ansprüche 1 bis 15,
**dadurch gekennzeichnet,**
**dass** Überwachungsmittel vorhanden sind zum Überwachen eines Primärstroms, einer Primärspannung und/oder einer Sekundärspannung.

17. Verbindungsmodul nach Anspruch 8,
**dadurch gekennzeichnet,**
**dass** die elektronischen Detektions- und Einstellmittel dazu konfiguriert sind, einen Leitungsbruch in den Verbindungen der Sekundäranschlüsse zu einem Feldgerät zu erkennen, wenn der Primärstrom kleiner ist als ein vierter Primärstromschwellwert, zum Beispiel gegeben durch 0,1 mA, der kleiner ist als die erste Primärstromschwelle.

18. Verfahren zum Bereitstellen einer galvanisch isolierten Verbindung eines Feldgeräts zu einer Steuereinrichtung beinhaltend die folgenden Schritte:
Verbinden einer Steuereinrichtung mit Primäranschlüssen (117, 118; 217, 218) an einer Primärseite (110) eines Verbindungsmoduls (101) und Verbinden eines Feldgeräts (134, 136,148,..,152) mit Sekundäranschlüssen (129,..,132; 229,..,232) an einer Sekundärseite (111) des Verbindungsmoduls (101), wobei
elektrische Signaleigenschaften und/oder elektrische Signalanforderungen der Steuereinrichtung und des Feldgeräts detektiert werden, wenn sowohl die Steuereinrichtung als auch das Feldgerät in Betrieb sind und
dass die elektrischen Parameter, zum Beispiel elektrische Transfercharakteristika, des Verbindungsmoduls dergestalt eingestellt werden, dass sie den detektierten Eigenschaften und/oder Anforderungen der Steuereinrichtung und des Feldgeräts entsprechen,
**dadurch gekennzeichnet,**
**dass** ein Verbindungsmodul nach einem der Ansprüche 1 bis 17 verwendet wird.

## Revendications

1. Module de connexion (101) adapté pour fournir une connexion isolée galvaniquement de dispositifs de terrain à une installation de commande, comprenant
un côté primaire (110) avec des connexions primaires (117, 118 ; 217, 218) pour la connexion à l'installation de commande,
un côté secondaire (111) avec des connexions secondaires (129, .., 132 ; 229, .., 232) pour la connexion au dispositif de terrain (134, 136, 148, .., 152) et
des moyens de couplage (103, .., 109) adaptés pour connecter de manière opérationnelle le côté primaire (110) au côté secondaire (111) et pour isoler galvaniquement le côté primaire (110) du côté secondaire (111),
dans lequel
des moyens électroniques de détection et de réglage (260, 261, 262, 270, 275, 276) sont adaptés pour détecter automatiquement des propriétés et/ou des exigences, par exemple des propriétés de signal électrique et/ou des exigences de signal électrique, d'une installation de commande et d'un dispositif de terrain lorsque l'installation de commande est connectée au côté primaire (110) et le dispositif de terrain est connecté au côté secondaire (111), et l'installation de commande et le dispositif de terrain fonctionnent tous deux pour régler automatiquement des paramètres électriques, par exemple des caractéristiques de transfert électrique, du module de connexion pour qu'ils répondent aux propriétés et/ou exigences détectées de l'installation de commande et du dispositif de terrain,
**caractérisé**
**en ce que** les moyens électroniques de détection et de réglage comprennent un dispositif de mesure de courant primaire (267, 270) pour mesurer un courant primaire à travers un enroulement primaire (208),
**en ce que** les moyens électroniques de détection et de réglage comprennent une première résistance variable (261) qui est connectée en série aux connexions primaires (217, 218) et
**en ce que** la première résistance variable (261) est réglée en fonction d'un courant primaire mesuré par le dispositif de mesure de courant primaire (267, 270).

2. Module de connexion selon la revendication 1,
**caractérisé en ce que**
le moyen de couplage comprend au moins un transformateur de courant (103, 108, 109) avec un enroulement primaire (108) et un enroulement secondaire (109) pour une isolation galvanique, avec un courant primaire circulant à travers l'enroulement primaire et un courant secondaire circulant à travers l'enroulement secondaire.

3. Module de connexion selon la revendication 2,
**caractérisé en ce que**
le transformateur (103, 108, 109) présente un rapport de transformation 1/1.

4. Module de connexion selon l'une des revendications 1 à 3, **caractérisé en ce que** les moyens de couplage (103, .., 109) comprennent un convertisseur CC/CA-CA/CC.

5. Module de connexion selon l'une des revendications 2 à 4,
**caractérisé**
**en ce que** les moyens électroniques de détection et de réglage comprennent un dispositif de mesure de tension primaire (260) pour mesurer une tension au niveau du côté primaire (110), aux bornes de l'enroulement primaire (208) ou une tension présente au niveau d'une connexion (264) de l'enroulement primaire (208), et
**en ce que** la première résistance variable (261) est également réglée en fonction d'une tension mesurée par le dispositif de mesure de tension primaire (260).

6. Module de connexion selon l'une des revendications 2 à 5,
**caractérisé**
**en ce que** les moyens électroniques de détection et de réglage comprennent un dispositif de mesure de tension secondaire (275) pour mesurer une tension au niveau du côté secondaire (111) ou aux bornes de l'enroulement secondaire (209),
**en ce que** les moyens électroniques de détection et de réglage comprennent une deuxième résistance variable (276) qui est connectée en série aux connexions secondaires (229, .., 232) ou en série à l'enroulement secondaire (209), et en ce que la deuxième résistance variable (276) est réglée en fonction d'une tension mesurée par le dispositif de mesure de tension secondaire (275).

7. Module de connexion selon les revendications 5 et 6
**caractérisé en ce que**
le dispositif de mesure de courant primaire (267, 270), le dispositif de mesure de tension primaire (260) et/ou le dispositif de mesure de tension secondaire (275) comprennent des comparateurs analogiques et **en ce que** un courant primaire mesuré est comparé à au moins un seuil de courant primaire,
une tension primaire mesurée est comparée à au moins un seuil de tension primaire, et/ou
une tension secondaire mesurée est comparée à au moins un seuil de tension secondaire.

8. Module de connexion selon l'une des revendications 1 à 7,
**caractérisé en ce que**
les moyens électroniques de détection et de réglage sont configurés pour régler des paramètres électriques du module de connexion pour qu'ils répondent à des propriétés et/ou des exigences d'un dispositif de terrain qui est commandé par un signal analogique, délivré par les connexions secondaires, si le courant primaire dépasse une première valeur seuil de courant primaire, par exemple de 3,5 mA, et si, en particulier simultanément, la tension primaire est inférieure à une première valeur seuil de tension primaire, par exemple de 21,5 V.

9. Module de connexion selon l'une des revendications 1 à 8,
**caractérisé**
**en ce que** les moyens électroniques de détection et de réglage comprennent un moyen de décalage de courant pour appliquer un décalage de courant au courant du côté primaire et
**en ce que** le moyen de décalage de courant applique un décalage de courant au courant primaire dans le cas où un courant primaire mesuré dépasse un premier seuil de courant primaire et, une tension primaire mesurée est inférieure à un premier seuil de tension primaire.

10. Module de connexion selon la revendication 3
**caractérisé**
**en ce que** les moyens électroniques de détection et de réglage comprennent des moyens pour augmenter une capacitance en parallèle au niveau du côté primaire,
des moyens pour réduire une impédance en série d'un filtre passe-bas primaire et/ou des moyens pour réduire le temps mort d'un pilote pour le transformateur 1/1.

11. Module de connexion selon la revendication 8
**caractérisé en ce que**
les moyens électroniques de détection et de réglage sont configurés pour régler des paramètres électriques du module de connexion pour qu'ils répondent à des propriétés et/ou des exigences d'un dispositif de terrain qui est commandé par un signal numérique, délivré au niveau des connexions secondaires, si le courant primaire dépasse une deuxième valeur seuil de courant primaire, par exemple de 24 mA, qui dépasse le premier seuil de courant primaire.

12. Module de connexion selon la revendication 10, **caractérisé en ce que**
les moyens pour augmenter une capacitance en parallèle au niveau du côté primaire,
les moyens pour réduire une impédance en série d'un filtre passe-bas primaire et/ou
les moyens pour réduire le temps mort d'un pilote pour transformateur 1/1 fonctionnent lorsque le courant mesuré du côté primaire dépasse un deuxième seuil de courant, par exemple 24 mA.

13. Module de connexion selon la revendication 8
**caractérisé en ce que**
les moyens électroniques de détection et de réglage sont configurés pour régler des paramètres électriques du module de connexion pour qu'ils répondent à des propriétés et/ou des exigences d'un dispositif de terrain produisant un signal numérique, par exemple un commutateur de proximité, pour qu'il soit entré au niveau des connexions secondaires, si le courant primaire est inférieur à une troisième valeur seuil de courant primaire, par exemple de 0,1 mA, la troisième valeur seuil de courant primaire étant inférieure à la première valeur seuil de courant primaire.

14. Module de connexion selon la revendication 13
**caractérisé en ce que**
les moyens électroniques de détection et de réglage sont configurés pour réduire proportionnellement la tension primaire au moyen de la première résistance variable (261) dans le cas où le courant du côté primaire est inférieur au troisième seuil, par exemple 0,1 mA.

15. Module de connexion selon l'une des revendications 1 à 14, **caractérisé en ce que**
les moyens électroniques de détection et de réglage comprennent une micro-unité de commande pour régler automatiquement des paramètres électriques, par exemple les caractéristiques de transfert électrique, du module de connexion pour qu'ils répondent à des propriétés et/ou des exigences détectées de l'installation de commande et du dispositif de terrain.

16. Module de connexion selon l'une des revendications 1 à 15, **caractérisé en ce que**
des moyens de surveillance sont fournis pour surveiller au moins l'un parmi un courant primaire, une tension primaire et/ou une tension secondaire.

17. Module de connexion selon la revendication 8
**caractérisé en ce que**
le moyen électronique de détection et de réglage est configuré pour reconnaître une interruption de ligne dans les connexions secondaires avec un dispositif de terrain si le courant primaire est inférieur à une quatrième valeur seuil de courant primaire, par exemple de 0,1 mA, qui est inférieure au premier seuil de courant primaire.

18. Procédé d'établissement d'une connexion isolée galvaniquement d'un dispositif de terrain à une installation de commande, comprenant les étapes suivantes : connecter une installation de commande à des connexions primaires (117, 118 ; 217, 218) au niveau d'un côté primaire (110) d'un module de connexion (101) et connecter un dispositif de terrain (134, 136, 148, .., 152) à des connexions secondaires (129, .., 132 ; 229, .., 232) au niveau d'un côté secondaire (111) du module de connexion (101) dans lequel
des propriétés de signal électrique et/ou des exigences de signal électrique, de l'installation de commande et du dispositif de terrain, sont détectées lorsque l'installation de commande et le dispositif de terrain, fonctionnent tous deux et en ce que des paramètres électriques, par exemple des caractéristiques de transfert électrique du module de connexion sont réglés pour répondre à des propriétés et/ou des exigences détectées de l'installation de commande et le dispositif de terrain,
**caractérisé en ce que**
un module de connexion selon l'une des revendications 1 à 17 est utilisé.
